## Europäisches Patentamt

## European Patent Office

## Office européen des brevets

(19)

(11) **EP 0 643 350 B1**

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(51) Int Cl.6: **G06F 11/10**

(21) Anmeldenummer: **93112827.6**

(22) Anmeldetag: **10.08.1993**

(54) **Verfahren zum Erkennen von Adressierungsfehlern bei Speichern für digitale binärcodierte Datenwörter**

Method to detect addressing errors in memories for binary coded data words

Procédé de détection d'erreurs d'adressage dans des mémoires pour mots de données binaires

(84) Benannte Vertragsstaaten:
AT BE CH DE DK ES FR GB GR IE IT LI NL PT SE

(43) Veröffentlichungstag der Anmeldung:
**15.03.1995 Patentblatt 1995/11**

(73) Patentinhaber: **SIEMENS AKTIENGESELLSCHAFT**
**80333 München (DE)**

(72) Erfinder: **Storm, Jürgen, Ing.-grad.**
**D-82178 Puchheim (DE)**

(56) Entgegenhaltungen:
**US-A- 4 049 956**      **US-A- 4 103 823**

- **IBM TECHNICAL DISCLOSURE BULLETIN. Bd. 33, Nr. 1B, Juni 1990, NEW YORK US, Seiten 294 - 296 'Memory-array word-line failure detection'**

**Beschreibung**

Die Erfindung betrifft ein Verfahren zum Erkennen von Adressierungsfehlern bei Speichern für digitale binärcodierte Datenwörter gemäß dem Oberbegriff des Patentanspruchs 1.

Als Speicher dieser Art kommen insbesondere solche in Frage, die zyklisch gelesen und wahlfrei geschrieben werden oder solche, die wahlfrei gelesen und zyklisch geschrieben werden. Ein typisches Beispiel für Speicher der ersten Art sind die Zeitstufenspeicher in Koppelnetzen digitaler Vermittlungsanlagen, ein typisches Beispiel für Speicher der zweiten Art sind die zur Ansteuerung der genannten Zeitstufenspeicher dienenden Haltespeicher.

Fehladressierungen der Speicher würden in diesen Anwendungsfällen zu Falschverbindungen führen.

Zur Sicherung gegenüber Fehladressierungen sind bisher unterschiedliche Maßnahmen ergriffen worden. Hierzu gehört die Paritätssicherung der einzelnen Ansteueradressen, der Einsatz von Prüfcodes, bei deren Bildung eine Mehrzahl oder die Gesamtheit der Ansteueradressen einbezogen werden, beispielsweise des sogenannten CRC-Codes (cyclic redundancy check character). Weitere bekannte Maßnahmen bestehen im Einsatz getrennter Decoder für Nutzdaten und Prüfcode oder in der Doppelung von Speicher und Decoder. Noch eine andere Sicherungsmaßnahme besteht in einer über den gesamten Speicher verteilten Einstreuung von Prüfworten bekannten Inhalts und der Überprüfung auf tatsächliches Vorhandensein dieser eingeschriebenen Worte am erwarteten Speicherplatz.

Diese genannten Maßnahmen sind entweder relativ wenig wirksam oder aber zu aufwendig.

Die Aufgabe der vorliegenden Erfindung besteht darin, eine Fehlererkennung bei Speichern solcher Art während des laufenden Betriebs und bei geringem Zusatzaufwand an Hardware und Software durchführen zu können und dabei einen hohen Fehlererkennungsgrad zu erzielen. Eine solche Fehlererkennung soll insbesondere bei in ASICs integrierten Speichern möglich sein, ohne daß das Schaltungslayout und die möglichen Fehlerarten exakt bekannt sind.

Diese Aufgabe wird durch ein Verfahren mit den im Patentanspruch 1 angegebenen Merkmalen gelöst.

Das erfindungsgemäße Verfahren stellt eine modifizierte Parityprüfung dar, für deren Durchführung jedoch nur ein geringer Hardware- und zusätzlicher Speicherplatzaufwand erforderlich sind.

Weitere Ausgestaltungen der Erfindung betreffen die zweckmäßige Durchführung des erfindungsgemäßen Verfahrens im einen Fall bei einem zyklisch einzuschreibenden und wahlfrei auszulesenden und im anderen Fall bei einem wahlfrei einzuschreibenden und zyklisch auszulesenden Speicher.

Nachstehend wird die Erfindung anhand von Ausführungsbeispielen unter Bezugnahme auf eine Zeichnung näher erläutert.

In der Zeichnung zeigen:
Figur 1 das Blockschaltbild eines zyklisch zu schreibenden und wahlfrei zu lesenden Speichers einschließlich der zu seiner Ansteuerung und der speziell zur Durchführung der Fehlerkennung erforderlichen Bestandteile.
Figur 2 eine entsprechende Darstellung eines zyklisch zu lesenden und wahlfrei zu schreibenden Speichers.
Figur 3 eine Tabelle zur Veranschaulichung des Wirkungsgrades des erfindungsgemäßen Verfahrens bei einem zyklisch zu schreibenden und wahlfrei zu lesenden Speicher.

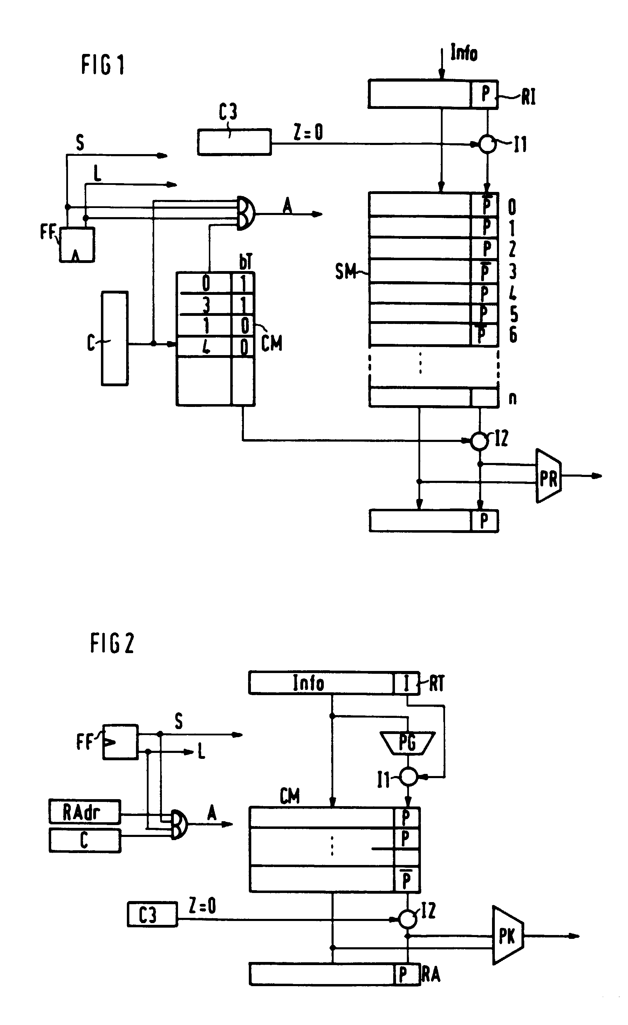

Figur 1 zeigt einen zyklisch zu schreibenden und wahlfrei zu lesenden Speicher SM, bei dem es sich beispielsweise um den Sprachspeicher der Zeitstufe einer digitalen Fernsprechvermittlungsstelle handeln möge. Er weist n Speicherplätze für jeweils ein mit einem Paritybit versehenes Datenwort auf. Die Datenwörter gelangen von einem Eingangsregister RI aus an den Sprachspeicher SM.

Die Ansteueradressen für das zyklische Einschreiben in den Speicher SM liefert ein Zähler C.

Die Ansteueradressen für das wahlfreie Auslesen gelangen aus einem Haltespeicher CM, der seinerseits ebenfalls vom Zähler C zyklisch angesteuert wird, an den Sprachspeicher SM.

Die Schreib- und die Leseansteuerung des Sprachspeichers SM erfolgen abwechselnd, wozu durch ein entsprechend umgeschaltetes bistabiles Kippglied FF das Verknüpfungsglied K einmal für die vom Zähler C und einmal für die vom Haltespeicher CM gelieferte Ansteueradresse durchgängig gemacht wird.

Die Besonderheit des erfindungsgemäßen Verfahrens besteht nun darin, daß die Datenwörter in der Weise in den Sprachspeicher eingeschrieben werden, daß dort in der Aufeinanderfolge der gespeicherten Datenwörter in periodischen Abständen jeweils eines der Datenwörter zu der jeweils anderen Parität ergänzt ist als die übrigen Datenwörter.

Gemäß weiterer Ausgestaltung der Erfindung ist die Anzahl der Datenwörter, die die periodischen Abstände umfassen, ein vorzugsweise kleiner Wert, der nur durch den niedrigsten als Dezimalzahl ausgedrückten Stellenwert eines binärcodierten Datenwortes, also durch 1 teilbar ist. Beim vorliegenden Ausführungsbeispiel ist als Abstand der Wert 3 gewählt.

Dementsprechend weist die Anordnung gemäß Figur 1 zusätzlich einen mit dem Zähler C synchronisierten Modul 0-3-Zähler C3 auf, der hier nach jeder Fortschaltung durch drei Zähltakte ein Bit des Binärwerts 0 abgibt. Das von diesem Zähler gelieferte Bit wird als Steuersignal für einen Inverter I verwendet, über den das Paritybit des im Register RI stehenden Datenwortes beim Einschreiben an einen entsprechenden Bitspeicherplatz im Sprachspeicher SM gelangt. Wenn nun also von dem Register RI aus Datenwörter, die durch ein Paritätsbit P beispielsweise auf gerade Parität ergänzt sind, in den Speicher SM eingeschrieben werden, erfolgt bei dem ersten, vierten, siebten, usw. Datenwort eine Invertierung des Paritätsbits und damit eine Ergänzung zur ungeradzahligen Parität durch ein Bit $\bar{P}$, wie dies in der Figur angedeutet ist.

Im Hinblick auf das erfindungsgemäße Verfahren sind die im Haltespeicher CM enthaltenen Ansteueradressen für das wahlfreie Auslesen um einen Bitspeicherplatz bl erweitert, in dem ein Indikatorbit steht, das angibt, ob bei dem betreffenden, im Sprachspeicher SM gespeicherten Datenwort das Paritätsbit invertiert ist oder nicht.

Mit diesem Indikatorbit wird ein zweiter Inverter I2 gesteuert, über den die Paritätsbits der aus dem Sprachspeicher SM ausgelesenen Datenwörter an eine Paritätskontrollschaltung PK gelangen, deren anderen Eingänge die Bits der zugehörigen Datenwörter zugeführt werden.

Es werden damit bei fehlerfreiem Betrieb diejenigen Paritätsbit, die beim Einschreiben in den Sprachspeicher invertiert worden sind, bzw. auf eine ungeradzahlige Parität im Gegensatz zu den Paritätsbits der übrigen Datenwörter ergänzen, wieder invertiert.

Die anschließende Paritätskontrolle durch die Paritätskontrollschaltung PK erfolgt dann für sämtliche Datenwörter auf das Vorliegen der vereinbarten geradzahligen Parität.

Entsprechend inverse Verhältnisse herrschen bei vereinbarter ungeradzahliger Parität.

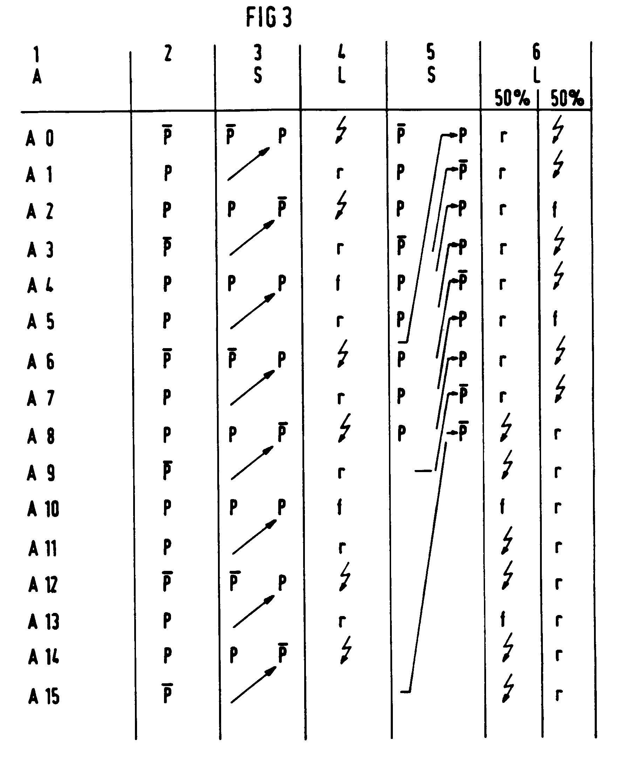

Bei der der Veranschaulichung der Wirksamkeit des erfindungsgemäßen Verfahrens beim Erkennen von Adressierungsfehlern beim zyklischen Einschreiben und wahlfreien Auslesen von Speichern dienenden Tabelle gemäß Figur 3 sind 4 Bits umfassende Adresseninformationen vorausgesetzt, was zu 16 unterscheidbaren Adressen A0 bis A15 führt.

In der Spalte 2 dieser Tabelle ist angegeben, bei welchen Adressen in Durchführung des erfindungsgemäßen Verfahrens und bei fehlerfreier Adressierung das Paritätsbit in Originalform, und bei welchen Adressen es in invertierter Form in den Speicher eingetragen wird.

Die Spalten 3 und 4 dienen der Veranschaulichung der Verhältnisse, die sich bei einem Adressierungsfehler ergeben, der darin liegt, daß das niedrigstwertige Adressbit dauernd auf 0 liegt.

Durch Pfeile ist dabei angedeutet, daß bei der zyklischen Adressierung im Zuge des Einschreibvorganges bei durch Paare aufeinanderfolgender Adressen angesteuerten Speicherplätzen das zunächst eingeschriebene Paritybit durch das Paritybit überschrieben wird, das an sich im nachfolgenden Speicherplatz stehen sollte. Entsprechendes gilt für die zugehörigen Datenwörter.

In der Spalte 4 ist dann angegeben, in welcher Weise sich dieser Fehler beim Auslesen auswirkt.

Es sind hierbei 3 Fälle zu unterscheiden. Im ersten Fall, beispielsweise bei der beabsichtigten Ansteuerung mit der Adresse A1, die jedoch aufgrund des Adressierungsfehlers von der Adresse A0 nicht zu unterscheiden ist, wird eine richtige Information ausgelesen und das Paritätsbit weist den richtigen, in diesem Fall nichtinvertierten Wert auf, da, wie dargelegt, der der Adresse A0 entsprechende Speicherplatz mit dem der Adresse A1 entsprechenden Datenwort und dem entsprechend der Erfindung hierfür gültigen Paritätsbit überschrieben worden ist. In Spalte 4 ist dementsprechend r eingetragen. Dieselben Verhältnisse liegen noch bei einer Leseansteuerung mit der Ansteueradresse A3, A5, A7, A9, A11 und A13 vor.

Bei einer Leseansteuerung mit der Ansteueradresse A4 wird eine Speicherzeile angesteuert, in die wegen des angenommenen Adressierungsfehlers das für den der Adresse A5 entsprechenden Speicherplatz bestimmte Datenwort einschließlich des zugehörigen Paritätsbit durch Uberschreiben eingetragen worden ist. Es wird demnach eine falsche Information ausgelesen, wobei jedoch das Paritätsbit wie erläutert, nicht invertiert ist, und damit eine richtige Parität vorliegt. Das bedeutet, daß in diesem Falle der Adressierungsfehler nicht erkannt werden kann, was in Spalte 4 durch Eintrag von f gekennzeichnet ist. Dieselben Verhältnisse liegen noch bei der Ansteuerung mit der Adresse A10 vor.

Ein dritter Fall liegt beispielsweise bei einer Leseansteuerung mit der Ansteueradresse A2 vor. Wegen des erläuterten fehlerbedingten Uberschreibens beim zyklischen Einschreiben wird hier anstelle des ursprünglich in den der Adresse A2 entsprechenden Speicherplatz eingeschriebenen Datenwortes das für den der Adresse A3 entsprechenden Speicherplatz bestimmte Datenwort einschließlich dem invertierten Paritätsbit ausgelesen. Da das richtige Paritätsbit für das richtige, ursprünglich in den der Adresse A2 entsprechenden Speicherplatz eingeschriebene Datenwort nicht invertiert war, wird hier also ein falsches Datenwort ausgelesen, das aber auch ein bezüglich der durch die Erfindung vorgesehenen Systematik falsche Parität aufweist. Der Fehler kann hier also erkannt werden.

Dieselben Verhältnisse liegen noch bei Ansteuerung mit den Adressen A0, A6, A8, A12 und A14 vor.

Die Spalten 5 und 6 der Tabelle gemäß Figur 3 veranschaulichen die Verhältnisse bei einem Adressierungsfehler, der darin liegt, daß das höchstwertige Adressenbit dauernd den Binärwert 0 beibehält.

Aus Spalte 5 ist ersichtlich, daß aufgrund dieses Adressierungsfehlers beim Schreiben die den Adressen A0 bis A7 entsprechenden Speicherplätze mit den für die den Adressen A8 bis A15 entsprechenden Speicherplätzen beschriebenen Datenwörtern einschließlich dem entsprechend gebildeten Paritätsbit überschrieben werden. In gleicher Weise werden im nachfolgenden Einschreibzyklus die den Adressen A8 bis A15 entsprechenden Speicherplätze mit den für die den Adressen A0 bis A7 entsprechenden Speicherplätze bestimmten Datenwörter überschrieben, was jedoch aus der Tabelle gemäß Figur 3 nicht ersichtlich ist.

Da bei einem Speicher wie dem Zeitstufenspeicher einer Vermittlungsstelle sich Lesen und Schreiben einander abwechseln, wirkt sich das erwähnte Überschreiben in einem ersten Durchlauf erst ab dem Auftreten der Adresse A8 aus, so daß ein zuvor stattfindendes Auslesen unter Ansteuerung durch die Adressen A0 bis A7 zu richtigen Ergebnissen, also dem Auslesen einer richtigen Information mit der richtigen Parität führt. Erst danach treten im Zusammenhang mit den Ansteueradressen A2 und A5 nicht erkennbare Fehler und im Zusammenhang mit den Adressen A0, A1, A3, A4, A6 und A7 erkennbare Fehler auf. Die Spalte 6 ist daher für die unterschiedlichen Situationen, die jeweils 50 % der auftretenden Fälle umfassen, zweigeteilt.

Entsprechendes ergibt sich für eine in den nachfolgenden Einschreibzyklus eingestreute Leseansteuerung mit den Adressen A8 bis A15.

Die Darstellung gemäß Figur 3 zeigt, daß im Mittel beim Zugriff zu jedem dritten Wort ein Paritätsalarm auftritt, also eine Fehlererkennungswahrscheinlichkeit von etwa 33 % besteht. Für einen Speicher der Kapazität, wie sie bei modernen Zeitstufen vorkommt, ( 1000 Worte) ist die Wahrscheinlichkeit ausreichend groß, daß bei einem vollen Durchlauf über alle Worte (125 µs) ein Fehler erkannt wird.

Anhand der Figur 2 wird noch kurz auf die Verhältnisse bei der Durchführung des erfindungsgemäßen Verfahrens im Zusammenhang mit einem zyklisch zu lesenden und wahlfrei zu schreibenden Speicher eingegangen. Ein solcher Speicher ist beispielsweise der Haltespeicher CM gemäß Figur 1. Die Figur 2 zeigt dementsprechend einen solchen Speicher CM, dessen Speicherzellen jeweils einen zusätzlichen Speicherplatz für ein Paritybit der einzuschreibenden Datenwörter aufweisen. Die Einschreibansteueradressen für diesen Speicher werden aus einem Adressenregister RAdr geliefert, das seinerseits von einer zentralen Steuerung aus jeweils im Zuge des Aufbaus einer neuen Verbindung beschrieben wird.

Die Ansteueradressen für das zyklische Lesen liefert ein Zähler C. Die Entscheidung darüber, welche der beiden Adressenarten über ein Koinzidenzglied K an den Speicher CM gelangen, hängt von der Schaltstellung einer bistabilen Kippstufe FF ab.

Im vorliegenden Fall ist angenommen, daß die in den Speicher CM einzuschreibenden Datenworte, bei denen es sich im als Beispiel angenommenen Anwendungsfall um die Ansteueradressen des Sprachspeichers SM gemäß Figur 1 handelt, von der Software der zentralen Steuerung mit einem Indikatorbit I versehen sind, das darüber entscheidet, ob das entsprechende Datenwort mit einem Paritätsbit in Originalform oder mit einem invertierten Paritätsbit, also auf die eine oder die andere Art von Parität ergänzt in den Speicher CM eingeschrieben werden soll. Dementsprechend wird im Zuge des Einschreibens von Datenwörtern, die einem Register RI entnommen werden, mit Hilfe eines Paritätsgenerators PG ein Paritätsbit gebildet, das beispielsweise zu einer geradzahligen Parität ergänzt und dieses Paritätsbit dann entsprechend dem Binärwert des zugehörigen Indikatorbits mittels eines Inverters I1 invertiert oder nicht. Bei den im Speicher CM gespeicherten Datenwörtern sind dann die Paritätsbits nach derselben Gesetzmäßigkeit wie dies anhand der Figur 1 erläutert worden ist, in sich zyklisch wiederholenden Abständen bei jeweils einem Datenwort invertiert.

Ein Modulo-3-Zähler C3, der mit dem Zähler C synchronisiert ist, liefert beim angenommenen Beispiel entsprechend der Folge der invertierten Paritätsbits im Abstand von 3 Zähltakten ein Bitsignal des Binärwerts 0, das den Inverter I2 steuert, durch den die zusammen mit den Datenwörtern aus dem Speicher CM ausgelesenen Paritätsbits vor ihrer Abgabe an ein Ausgaberegister RA bzw. ihre Weitergabe an eine Paritätskontrollschaltung PK mittels eines zweiten Inverters I2 invertiert werden oder nicht. Durch die Paritätskontrollschaltung können dann wieder in dem anhand von Figur 3 erläuterten Umfang Adressierungsfehler erkannt werden.

Anstelle der Zuordnung eines Indikatorbits zu den in den Speicher CM einzuschreibenden Datenwörtern kann in Entsprechung der Verhältnisse bei wahlfreiem Auslesen gemäß Figur 1 auch so vorgegangen werden, daß die einzelnen Datenwörter zunächst schon mit einem Paritätsbit versehen angeliefert werden und die Entscheidung darüber, ob dieses Paritätsbit beim Einschreiben in den Speicher invertiert werden soll oder nicht, aufgrund eines Entscheidungsbits getroffen werden, das in der im Register RAdr zwischengespeicherten Anschreibsteueradresse enthalten ist.

Bei sowohl wahlfrei zu lesenden als auch wahlfrei zu schreibenden Speichern, auf die das erfindungsgemäße Verfahren ebenfalls anwendbar ist, muß die Funktion des Modulo-n-Zählers in der Software, die die Adresseninformation erzeugt, nachgebildet werden.

Das erfindungsgemäße Verfahren ist über die Erkennung von Adressierungsfehlern hinaus auch für die Erkennung von Fehlern bei den betreffenden Datenwörtern geeignet.

**Patentansprüche**

1. Verfahren zum Erkennen von Adressierungsfehlern bei Speichern (SM) für digitale binär codierte Datenwörter, **dadadurch gekennzeichnet daß** die Datenwörter derartig durch wenigstens ein Paritätsbit zu einer bestimmten Parität von Binärwerten ergänzt in den Speicher (SM) eingeschrieben werden, daß in der Aufeinanderfolge der gespeicherten Datenwörter in vorzugsweise kleinen periodischen Abständen, die eine Primzahl von Datenwörtern umfassen, jeweils eines der Datenwörter zu der jeweils anderen Parität ergänzt ist als die übrigen Datenwörter, und daß beim Lesen der genannten abweichend behandelten Datenwörter deren wenigstens eines Paritätsbit ($\bar{P}$) invertiert wird, bevor eine Paritätskontrolle stattfindet.

**2.** Verfahren nach Anspruch 1 zur Anwendung auf einen zyklisch einzuschreibenden und wahlfrei auszulesenden Speicher (SM), **dadurch gekennzeichnet,** daß das Paritätsbit der Datenwörter vor deren zyklischen Einschreiben in den Speicher (SM) bei entsprechendem Binärwert eines von einem Modulo-n-Zähler (C3), der mit dem die zyklischen Einschreibadressen liefernden Zähler (C) synchronisiert ist, gelieferten Steuerbit invertiert wird, und daß die Adressen für das wahlfreie Auslesen durch ein Indikatorbit (BI) ergänzt werden, das bei entsprechendem Binärwert mit invertiertem Paritätsbit eingeschriebene Datenwörter kennzeichnet und beim Auslesen solcher Datenwörter das nochmalige Invertieren der Paritätsbits vor der Durchführung einer Paritätsbitskontrolle veranlaßt.

**3.** Verfahren nach Anspruch 1 zur Anwendung auf einen wahlfrei einzuschreibenden und zyklisch auszulesenden Speicher (CM), **dadurch gekennzeichnet,** daß die Datenwörter in Abhängigkeit von ihrer sich aus ihren Einschreibadressen ergebenden Einordnung in einem Auslesezyklus mit unverändertem oder mit invertiertem Paritätsbit eingeschrieben werden, und daß bei ihrem zyklischen Auslesen ihr Paritätsbit bei entsprechendem Binärwert eines von einem Modulo-n-Zähler (C3), der mit dem die zyklischen Ansteuerleseadressen liefernden Zähler (C) synchronisiert ist, gelieferten Steuerbits vor der Durchführung einer Paritätskontrolle (PK) invertiert wird.

## Claims

**1.** Method for detecting addressing errors in memories (SM) for digital binary coded data words, characterized in that the data words are written into the memory (SM) complemented to a particular parity of binary values by at least one parity bit, in such a manner that in the succession of stored data words, at preferably small periodic intervals which comprise a primary number of data words, in each case one of the data words is complemented to the in each case other parity than the remaining data words, and that during the reading of the said data words treated differently, the at least one parity bit of these data words is inverted ($\bar{p}$) before a parity check is made.

**2.** Method according to Claim 1 for application to a memory (SM) which is to be written into cyclically and to be read out randomly, characterized in that the parity bit of the data words, before they are cyclically written into the memory (SM), is inverted with the appropriate binary value of a control bit supplied by a modulo-n-counter (C3) which is synchronized with the counter (C) supplying the cyclic write addresses, and in that the addresses for the random read-out are complemented by an indicator bit (BI) which, with the appropriate binary value, identifies data words written in with an inverted parity bit and, when such data words are read out, initiates a reinversion of the parity bits before a parity-bit check is made.

**3.** Method according to Claim 1 for application to a memory (CM) which is to be written into randomly and to be read out cyclically, characterized in that the data words are written in with an unchanged or with an inverted parity bit in dependence on their order in a read-out cycle which results from their write addresses, and in that during their cyclic read-out, their parity bit is inverted with the appropriate binary value of a control bit supplied by a modulo-n-counter (C3) which is synchronized with the counter (C) supplying the cyclic select read addresses, before a parity check (PK) is made.

## Revendications

**1.** Procédé de détection d'erreurs d'adressage dans des mémoires (SM) pour des mots numériques d'information à codage binaire **caractérisé par le fait** que les mots d'information sont écrits dans la mémoire après avoir été complétés, par au moins un bit de parité, pour avoir une parité déterminée de valeurs binaires telle que, dans la succession des mots d'information, enregistrés à des intervalles périodiques, de préférence petits, qui comprend une nombre primaire de mots d'information, respectivement un des mots d'information est complété pour qu'il ait la parité opposée à celle des autres mots d'information et que, lors de la lecture des dits mots d'information qui ont été traités d'une façon différente, au moins un de leurs bits de parité (P) est inversé avant qu'il n'y ait un contrôle de parité.

**2.** Procédé, conforme à la revendication 1, pour application à une mémoire (SM) à écriture cyclique et à lecture aléatoire, **caractérisé par le fait** que le bit de parité des mots d'information est inversé, avant leur écriture cyclique dans la mémoire (SM), dans le cas où un bit de commande, fourni par un compteur modulo n (C3), qui est synchronisé avec le compteur (C), lequel, lui-même, délivre les adresses cycliques d'écriture, a une valeur binaire correspondante et que les adresses pour la lecture aléatoire sont complétées par un bit indicateur (BI), qui, pour une valeur binaire correspondante, caractérise les mots d'information écrits avec un bit de parité inversé et qui, lors de la lecture de tels mots d'information, provoque la réinversion du bit de parité avant l'exécution d'un contrôle de bit de parité.

3. Procédé, conforme à la revendication 1, pour application à une mémoire (CM) à écriture aléatoire et à lecture cyclique,
**caractérisé par le fait** que les mots d'information sont, en fonction de leur emplacement dans un cycle de lecture, lui-même déterminé par leurs adresses d'écriture, écrits avec un bit de parité non modifié ou inversé et que, lors d'une lecture cyclique, leur bit de parité est inversé avant l'exécution d'un contrôle de parité (PK), pour une valeur binaire correspondante d'un bit de commande fourni par un compteur modulo n (C3), qui est en synchronisation avec le compteur (C), lequel délivre les adresses cycliques de sélection en lecture.

FIG 1

FIG 2

## FIG 3

| 1 A | 2 | 3 S | 4 L | 5 S | 6 L 50% | 50% |
|---|---|---|---|---|---|---|
| A 0 | P̄ | P̄ → P | ⚡ | P̄ → P | r | ⚡ |
| A 1 | P | ↗ | r | P → P̄ | r | ⚡ |
| A 2 | P | P → P̄ | ⚡ | P → P | r | f |
| A 3 | P̄ | ↗ | r | P̄ → P | r | ⚡ |
| A 4 | P | P → P | f | P → P̄ | r | ⚡ |
| A 5 | P | ↗ | r | P → P | r | f |
| A 6 | P̄ | P̄ → P | ⚡ | P → P | r | ⚡ |
| A 7 | P | ↗ | r | P → P̄ | r | ⚡ |
| A 8 | P | P → P̄ | ⚡ | P → P̄ | ⚡ | r |
| A 9 | P̄ | ↗ | r | | ⚡ | r |
| A 10 | P | P → P | f | | f | r |
| A 11 | P | ↗ | r | | ⚡ | r |
| A 12 | P̄ | P̄ → P | ⚡ | | ⚡ | r |
| A 13 | P | ↗ | r | | f | r |
| A 14 | P | P → P̄ | ⚡ | | ⚡ | r |
| A 15 | P̄ | ↗ | | | ⚡ | r |

8